(19) Europäisches Patentamt
European Patent Office
Office européen des brevets

(11) **EP 3 560 023 B1**

(12) **EUROPÄISCHE PATENTSCHRIFT**

(45) Veröffentlichungstag und Bekanntmachung des Hinweises auf die Patenterteilung:
**14.07.2021 Patentblatt 2021/28**

(21) Anmeldenummer: **17823098.3**

(22) Anmeldetag: **19.12.2017**

(51) Int Cl.:
*H01M 10/0569* (2010.01)    *H01M 10/0568* (2010.01)
*H01M 10/0525* (2010.01)    *H01M 4/66* (2006.01)
*H01G 11/60* (2013.01)    *H01G 11/62* (2013.01)
*H01G 11/68* (2013.01)

(86) Internationale Anmeldenummer:
**PCT/EP2017/083610**

(87) Internationale Veröffentlichungsnummer:
**WO 2018/114990 (28.06.2018 Gazette 2018/26)**

(54) **ELEKTROLYT FÜR LITHIUM-IONEN-BATTERIEN**

ELECTROLYTE FOR LITHIUM-ION-BATTERIES

ÉLECTROLYTE POUR BATTERIES LITHIUM-ION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.12.2016 DE 102016125323**
           **04.04.2017 DE 102017107253**

(43) Veröffentlichungstag der Anmeldung:
**30.10.2019 Patentblatt 2019/44**

(73) Patentinhaber:
• **Westfälische Wilhelms-Universität Münster**
**48149 Münster (DE)**
• **Forschungszentrum Jülich GmbH**
**52425 Jülich (DE)**

(72) Erfinder:
• **BROX, Sebastian**
**48249 Dülmen (DE)**
• **CEKIC-LASKOVIC, Isidora**
**48161 Münster (DE)**
• **GRÜNEBAUM, Mariano**
**59394 Nordkirchen (DE)**
• **KRAUSE, Christian Hans**
**48153 Münster (DE)**
• **RÖSER, Stephan**
**48161 Münster (DE)**
• **WAGNER, Ralf**
**25524 Itzehoe (DE)**
• **WIEMHÖFER, Hans-Dieter**
**48161 Münster (DE)**
• **WINTER, Martin**
**48149 Münster (DE)**

(74) Vertreter: **Michalski Hüttermann & Partner Patentanwälte mbB**
**Speditionstraße 21**
**40221 Düsseldorf (DE)**

(56) Entgegenhaltungen:
EP-A1- 1 406 336      EP-A1- 1 508 934
JP-A- 2005 267 857     JP-A- 2016 207 313
US-A1- 2016 285 127    US-A1- 2016 351 960

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft das Gebiet der Lithium-Ionen-Batterien.

Lithium-Ionen-Batterien (Sekundärbatterien) stellen derzeit die führende Technologie auf dem Gebiet der wieder aufladbaren Batterien dar, insbesondere im Bereich der portablen Elektronik. Aufgrund ihrer hohen Energie- und Leistungsdichte sowie niedrigen Selbstentladung zeigen Lithium-Ionen-Batterien ebenfalls ein hohes Potential für Anwendungen in Elektromobilitätskonzepten und stationären Anlagen. Lithium-Ionen Batterien umfassen zwei Elektroden, die durch einen Separator räumlich voneinander getrennt sind. Der Ladungstransport erfolgt über einen Elektrolyten, der ein Lithiumsalz, welches in einem organischen Lösungsmittel gelöst ist, umfasst. Derzeit wird in kommerziell erhältlichen Lithium-Ionen Batterien Lithiumhexafluorophosphat ($LiPF_6$) als Leitsalz verwendet. $LiPF_6$ weist eine relativ hohe Leitfähigkeit auf, ist jedoch, im besonderen Maße in nicht-wässrigen Elektrolytsystemen, sowohl sehr hydrolyseanfällig, als auch thermisch instabil. Durch Reaktion von $LiPF_6$ mit einem, in nicht-wässrigen Elektrolytsystemen unvermeidlichen, Anteil von Restwasser kommt es zur Bildung von HF und anderen hochtoxischen Nebenprodukten. Die Nutzung dieser Elektrolytsysteme basierend auf $LiPF_6$ resultiert aus diesen Gründen in einer recht kurzen Lebensdauer des Elektrolytsystems. So geben Hersteller auf Standerdelektrolyten wie der LP-Reihe der BASF ein Verfallsdatum von nur sechs Monaten nach dem Produktionsdatum an. Daher gibt es Bemühungen, alternative Lithiumsalze zu entwickeln, die $LiPF_6$ als Leitsalz ersetzen können.

Geeignete Salze sind beispielsweise Lithiumbis(fluorosulfonyl)imid (LiFSI), Lithiumtrifluormethansulfonat (LiTf) und Lithiumbis(trifluormethylsulfonyl)imid (LiTFSI). Insbesondere LiTf und LiTFSI besitzen eine hohe thermische und elektrochemische Stabilität, sind nicht toxisch und unempfindlich gegenüber Hydrolyse. Jedoch ist ihr praktischer Einsatz in Lithium-Ionen-Batterien derzeit nicht möglich, da die Anionen zu erheblichen Auflösungsreaktionen an Stromableitermaterialien wie Aluminium führen, die üblicherweise als "Korrosion" bezeichnet werden. Aluminium wird in Lithium-Ionen-Batterien als Stromableiter verwendet, da es günstig und in hoher Reinheit verfügbar ist. Zudem bildet es passivierende Schutzschichten auf der Oberfläche aus. Korrosive Salze wie die vorgenannten können Aluminium jedoch schnell auflösen und damit die Zelle zerstören. So kommt es unter Verwendung von Standard-Flüssigelektrolytsystemen basierend auf zyklischen und linearen Carbonaten in Kombination mit LiTFSI ab einem Potential von etwa 3,6 V vs. $Li/Li^+$ zu einem merklichen Anstieg der Stromintensität, welche der anodischen Auflösung des Aluminium-Stromableiters zuzuweisen ist. Dies ist einerseits dem Unvermögen des LiTFSIbasierten Elektrolyten zur Ausbildung einer passivierenden Deckschicht auf der Aluminiumoberfläche, wie auch der guten Löslichkeit der $Al(TFSI)_x$-Komplexe in diesen Elektrolyten, zuzuschreiben. Dieser Umstand verhindert daher derzeit anwendungsnahe Lithium-Ionen-Batteriesysteme, insbesondere mit einer Zellspannung > 4,2 V vs $Li/Li^+$, mit dem Leitsalz LiTFSI oder strukturell ähnlichen Imiden einzusetzen.

Zur Nutzung von Elektrolytsystemen basierend auf LiFSI als Leitsalz wurde bereits eine vorherige Passivierung des Stromableiters mit einer definierten Schutzschicht aus $AlF_3$ oder $Al_2O_3$ vorgeschlagen. Dies ist jedoch aufwändig und damit unrentabel. Auch Modifikationen des organischen Lösungsmittels wurden diskutiert, beispielsweise eine Verwendung von fluorierten Carbonsäureestern wie Methyldifluoroacetat (MFA) als Lösungsmittel für LiTFSI. Auch die Verwendung von bei Raumtemperatur flüssigen ionischen Flüssigkeiten (RTIL) als Lösungsmittel bietet eine Möglichkeit. Jedoch resultiert die Verwendung von RTIL als Hauptbestandteil von Elektrolytsystemen in einer merklichen Erhöhung der Kosten. Des Weiteren kommt es zu einer erheblichen Leistungsverminderung der Batterie unter Nutzung hoher Stromdichten. Die Verwendung von RTIL in kommerziellen Zellen ist daher nicht wirtschaftlich. Weiter wurde eine Verwendung von Acetonitril als Lösungsmittel für LiTFSIbasierte Elektrolytsysteme vorgeschlagen. Die Verwendung von Acetonitril resultiert unter Normalbedingungen jedoch in einer Inkompatibilität mit Graphit-Anoden bei niedrigen Spannungen und findet in kommerziellen Zellen daher keine Verwendung.

Die Schrift DE 60 2004 004 956 T2 offenbart einen Elektrolyten für eine wiederaufladbare Lithium-Batterie, enthaltend ein nichtwässriges organisches Lösungsmittel, das 5 bis 30 Volumenprozent eines Lösungsmittels auf Nitril-Basis enthält. Der Zusatz des Lösungsmittels auf Nitril-Basis dient der Unterdrückung des Schwellungsphänomens. Weiter wird offenbart, dass eine Menge von mehr als 30 Volumenprozent die Batterieleistung verschlechtert, so dass ab dieser Menge der gewünschte Effekt nicht mehr erzielt wird.

Das Dokument US 2016/351960 A1 beschreibt eine Elektrolytlösung für eine Lithium-Ionen-Batterie, welche ein Alkalimetallsalz und ein Lösemittel enthaltend Cyclopropancarbonitril umfasst.

Die Schrift JP 2016 207313 A offenbart ebenfalls die Verwendung von Nitrilverbindungen, wie etwa Cyanocyclopentan oder Cyanocyclohexan, als Hauptbestandteil eines Lösungsmittelgemischs für Batterieelektrolyten.

Die Dokumente JP 2005 267857 A, EP 1 406 336 A1 und US 2016/285127 A1 beschreiben Elektrolytlösungen enthaltend lineare Nitrilverbindungen, die Alkoxyalkyl- oder Siloxyalkylgruppen aufweisen, als Haupt- oder Nebenkomponente eines Lösungsmittelgemischs.

Es besteht daher weiter Bedarf an Lösungsmitteln, die für die Verwendung mit LiTFSI und strukturell ähnlichen Imiden in Lithium-Ionen-Batterien geeignet sind. Der vorliegenden Erfindung lag daher die Aufgabe zu Grunde, einen Elektrolyten bereit zu stellen, der eine Korrosion eines Aluminium-Stromsammlers bei Verwendung von LiTFSI und strukturell ähnlichen Imiden als Leitsalz hemmt.

Diese Aufgabe wird gelöst durch einen Elektrolyten für einen elektrochemischen Energiespeicher umfassend ein Elektrolytsalz und wenigstens ein Lösemittel, wobei das Lösemittel im Bereich von ≥ 50 Gew.-% bis ≤ 100 Gew.-%, bezogen auf das Gesamtgewicht des Lösemittels, eines Gemischs eines nicht-aromatischen zyklischen Nitrils der Formel (1) NC-$R^1$ und eines linearen Nitrils der Formel (2) NC-$R^2$ umfasst, worin:

$R^1$    ausgewählt ist aus der Gruppe umfassend $C_3$-$C_7$-Cycloalkyl und/oder $C_3$-$C_7$-Cycloalkenyl, jeweils unsubstituiert oder einfach oder mehrfach substituiert mit wenigstens einem Substituenten ausgewählt aus der Gruppe umfassend F, $C_1$-$C_5$-Alkyl, $C_1$-$C_4$-Alkoxy und/oder $C_1$-$C_4$-Siloxy, jeweils unsubstituiert oder einfach oder mehrfach mit Fluor substituiert,

$R^2$    ausgewählt ist aus der Gruppe umfassend Alkoxyalkyl, Siloxyalkyl, wobei die Alkylgruppe jeweils 1 bis 8 Kohlenstoffatome und die Alkoxy- und Siloxygruppen jeweils 1 bis 4 Kohlenstoffatome aufweisen und unsubstituiert oder einfach oder mehrfach mit Fluor substituiert sind, und/oder unsubstituiertes oder einfach oder mehrfach mit Fluor substituiertes $C_{1-8}$-Alkyl.

Die Aufgabe wird weiter gelöst durch die Verwendung eines solchen Elektrolyten zur Hemmung der Korrosion eines Aluminium-Stromleiters eines elektrochemischen Energiespeichers enthaltend ein Elektrolytsalz ausgewählt aus der Gruppe umfassend Alkali-oder Erdalkalisulfonimidsalze, -methidsalze, -sulfonatsalze und/oder -oxalatoboratsalze. Überraschend wurde gefunden, dass ein Elektrolyt enthaltend ein nicht-aromatisches zyklisches Nitril der Formel NC-$R^1$ oder ein Gemisch des zyklischen Nitrils und eines linearen Nitrils der Formel NC-$R^2$ bei Verwendung von LiTFSI als Leitsalz keine mess- bzw. sichtbaren Auflösungserscheinungen eines Aluminium-Stromableiters bis zu einer Abschaltspannung von bis zu 4,3 V vs Li/$Li^+$, auch ohne Zusatz eines Additivs zur Passivierung des Aluminium-Stromableiters, zeigt. Somit kann ein nicht-korrosiver Elektrolyt zur Verwendung von LiTFSI und ähnlich korrosiv wirkenden Leitsalzen zur Verfügung gestellt werden. Dies erlaubt die Entwicklung eines Hydrolyse-unempfindlichen Elektrolytsystems unter Verwendung von LiTFSI in Lithium-Ionen-Batterien mit Abschaltspannung von 4,3 V vs Li/$Li^+$.

Es konnte gezeigt werden, dass der Elektrolyt eine gute Leitfähigkeit und ein weites elektrochemisches Stabilitätsfenster zeigt. Zudem zeigte sich der Elektrolyt kompatibel mit Graphit-Anoden und Li($Ni_{1/3}$-$Mn_{1/3}$-$Co_{1/3}$)$O_2$ (NMC(111))-Kathoden. Es ist von großem Vorteil, dass der Elektrolyt erlaubt, LiTFSI als Leitsalz mit gängigen Elektrodenmaterialien wie NMC(111), LiFePO$_4$ (LFP), LiMn$_2$O$_4$ (LMO), Li($Ni_x$Co$_y$Mn$_z$)$O_2$ (x+y+z=1) (NMC(XYZ)) und Li($Ni_x$Co$_y$Al$_z$)$O_2$ (x+y+z=1) (NCA) zu verwenden.

Der erfindungsgemäße Elektrolyt erlaubt die Verwendung von LiTFSI und ähnlichen korrosiven Leitsalzen in Lithium-Ionen-Batterien. Damit können Elektrolyte bereitgestellt werden, die im Vergleich zu LiPF$_6$-basierten Elektrolytsystemen deutlich sicherer in der Anwendung und lagerbeständiger sind. Insbesondere die bei erhöhten Temperaturen > 50 °C in LiPF$_6$-basierten Elektrolytsystemen auftretenden und für die Lebensdauer einer Lithium-Ionen-Batterie entscheidenden Zersetzungsprodukte wie HF treten in den erfindungsgemäßen Elektrolyten nicht auf, wodurch Sicherheit und Lebensdauer deutlich erhöht werden. Somit kann ein Elektrolyt umfassend ein zyklisches Nitril NC-$R^1$ oder ein Gemisch des zyklischen Nitrils und eines linearen Nitrils NC-$R^2$ in Lithium-Ionen Batterien eine erhebliche Verbesserung der Betriebssicherheit zur Verfügung stellen.

Eine Hemmung der Aluminium-Korrosion in einem Umfang, der den Betrieb einer Batterie mit ausreichend erhöhter Lebensdauer erlaubt, konnte festgestellt werden, wenn der Anteil an nicht-aromatischem zyklischen Nitril der Formel NC-$R^1$ oder an Gemisch des zyklischen Nitrils und des linearen Nitrils der Formel NC-$R^2$ wenigstens die Hälfte des Lösemittels ausmachte. Vorzugsweise bildet das zyklische Nitril oder das Gemisch aus zyklischem und linearem Nitril den Hauptbestandteil des Lösemittels aus. In Ausführungsformen enthält der Elektrolyt das zyklische Nitril NC-$R^1$ oder das Gemisch aus zyklischem Nitril NC-$R^1$ und linearem Nitril NC-$R^2$ in einem Bereich von ≥ 70 Gew.-% bis ≤ 100 Gew.-%, oder in einem Bereich von ≥ 75 Gew.-% bis ≤ 100 Gew.-%, vorzugsweise im Bereich von ≥ 80 Gew.-% bis ≤ 90 Gew.-%, oder im Bereich von ≥ 80 Gew.-% bis ≤ 100 Gew.-%, bezogen auf ein Gesamtgewicht des Lösemittels von 100 Gew.-%. Insbesondere in diesen Bereichen kann eine Aluminium-Korrosion deutlich gehemmt werden, so dass eine Lithium-Ionen-Batterie mit guter Lebensdauer bereitgestellt werden kann.

Wenn im Folgenden nicht abweichend angegeben, beziehen sich angegebene Anteile oder Verhältnisse der Lösemittel oder Komponenten auf deren Gewichtsanteile, wobei das Gesamtgewicht des Lösemittels 100 Gew.-% nicht überschreitet.

Der Begriff "$C_3$-$C_7$-Cycloalkenyl" umfasst, wenn nicht anders angegeben, eine Cycloalkenylgruppe mit 3 bis 7 Kohlenstoffatomen und mindestens einer Doppelbindung. Der Begriff "$C_1$-$C_5$-Alkyl" umfasst, wenn nicht anders angegeben, geradkettige oder verzweigte Alkylgruppen mit 1 bis 5 Kohlenstoffatomen. Alkylgruppen mit 1 bis 5 Kohlenstoffatomen sind insbesondere ausgewählt aus der Gruppe umfassend Methyl, Ethyl, Propyl, Isopropyl, Butyl, Isobutyl, Pentyl, Isopentyl und/oder Neopentyl.

$C_1$-$C_4$-Alkoxygruppen sind vorzugsweise ausgewählt aus der Gruppe umfassend Methoxy, Ethoxy, lineares oder verzweigtes Propoxy und/oder Butoxy.

Der Begriff "$C_1$-$C_4$-Siloxy" umfasst, wenn nicht anders angegeben, eine Siloxygruppe, deren Alkylsubstituenten 1 bis 4 Kohlenstoffatome aufweisen, wobei die Substituenten gleich oder verschieden sein können. Vorzugsweise sind die Alkylsubstituenten am Silicium gleich.

Im Sinne der vorliegenden Erfindung sind, wenn nicht abweichend angegeben, unter den Begriffen "Alkoxyalkyl" und "Siloxyalkyl" Gruppen zu verstehen, die über den jeweils letztgenannten Teil gebunden sind, beispielsweise sind für das Strukturelement $R^2$ die "Alkoxyalkyl"- und "Siloxyalkyl"-Gruppe jeweils über den $C_1$-$C_8$-Alkylteil an die Carbonitrilgruppe gebunden.

Das zyklische Nitril der Formel (1) NC-$R^1$ kann je nach Ringgröße des Cycloalkenyls eine, zwei oder drei Doppelbindungen enthalten, das zyklische Nitril bildet jedoch kein aromatisches System aus. $R^1$ kann ein $C_3$-$C_7$-Cycloalkyl oder ein $C_3$-$C_7$-Cycloalkenyl sein, das unsubstituiert sein kann, oder einfach oder mehrfach substituiert mit wenigstens einem Substituenten ausgewählt aus der Gruppe umfassend F, $C_1$-$C_5$-Alkyl, $C_1$-$C_4$-Alkoxy und/oder $C_1$-$C_4$-Siloxy, wobei diese, insbesondere die $C_1$-$C_5$-Alkylgruppe, wie auch die $C_1$-$C_4$-Alkylgruppen der Alkoxy- und Siloxysubstituenten jeweils einfach oder mehrfach mit Fluor substituiert sein können. Bevorzugt sind fluorierte oder nicht fluorierte $C_1$-$C_4$-Alkylgruppen, insbesondere perfluorierte $C_1$-$C_4$-Alkylgruppen. Weiter bevorzugt sind perfluorierte $C_1$-$C_3$-Alkylgruppen ausgewählt aus $CF_3$, $C_2F_5$ und/oder $C_3F_7$.

In Ausführungsformen des nicht-aromatischen zyklischen Nitrils der Formel (1) NC-$R^1$ ist die Gruppe $R^1$ ein $C_5$- oder $C_6$-Cycloalkyl, das unsubstituiert oder einfach oder mehrfach mit Fluor oder einer fluorierten oder perfluorierten $C_1$-$C_3$-Alkylgruppe substituiert ist. Die $C_5$- oder $C_6$-Cycloalkylgruppe kann einfach oder mehrfach mit F, $CF_3$, $C_2F_5$ und/oder $C_3F_7$ substituiert sein. Vorzugsweise ist die $C_5$- oder $C_6$-Cycloalkylgruppe unsubstituiert. Das nicht-aromatische zyklische Nitril kann insbesondere Cyclopentancarbonitril oder Cyclohexancarbonitril sein. In bevorzugten Ausführungsformen ist das nicht-aromatische zyklische Nitril Cyclopentancarbonitril. Cyclopentancarbonitril hat sich als besonders geeignet in Bezug auf die Hemmung der Aluminiumkorrosion herausgestellt. Zudem ist Cyclopentancarbonitril kommerziell und in ausreichender Reinheit erhältlich. Insbesondere wurde überraschend festgestellt, dass Cyclopentancarbonitril als alleiniges Lösemittel für den Betrieb einer Lithium-Ionen-Batterie geeignet ist. So zeigt Cyclopentancarbonitril in Verbindung mit 1M LiTFSI insbesondere bei tiefen Temperaturen eine höhere Leitfähigkeit als Propylencarbonat. Cyclopentancarbonitril als Lösemittel kann somit einen sehr guten Tieftemperaturelektrolyten ausbilden.

Das zyklische Nitril der Formel (1) NC-$R^1$, insbesondere Cyclopentancarbonitril, ist als alleiniges Lösemittel oder im Gemisch mit üblichen Lösemitteln, beispielsweise Carbonat-Verbindungen, verwendbar. Erfindungsgemäß umfasst der Elektrolyt das nicht-aromatische zyklische Nitril der Formel (1) NC-$R^1$ im Gemisch mit einem linearen Nitril NC-$R^2$.

Das lineare Nitril der Formel (2) NC-$R^2$ umfasst den Substituenten $R^2$, der ausgewählt sein kann aus unsubstituierten oder einfach oder mehrfach mit Fluor substituierten $C_{1-8}$-Alkylgruppen sowie Alkoxyalkyl oder Siloxyalkyl, wobei deren Alkylgruppe jeweils 1 bis 8 Kohlenstoffatome und die Alkoxy- und Siloxygruppen jeweils 1 bis 4 Kohlenstoffatome aufweisen und unsubstituiert oder einfach oder mehrfach mit Fluor substituiert sind. Die Alkoxyalkylgruppen und Siloxyalkylgruppen lassen sich somit als -$C_{1-8}$-Alkyl-O-$C_{1-4}$-Alkyl und -$C_{1-8}$-Alkyl-O-Si($C_{1-4}$-Alkyl)$_3$ ausdrücken, wobei die $C_{1-4}$-Alkylgruppen jeweils unsubstituiert oder einfach oder mehrfach mit Fluor substituiert sein können. In Ausführungsformen ist das lineare Nitril der Formel (2) NC-$R^2$ ausgewählt aus der Gruppe umfassend N≡C-$C_{2-4}$-Alkyl-O-$C_{1-4}$-Alkyl und/oder N≡C-$C_{2-4}$-Alkyl-O-Si($C_{1-4}$-Alkyl)$_3$, wobei die $C_{1-4}$-Alkylgruppen unsubstituiert oder einfach oder mehrfach mit Fluor substituiert sein können. Bevorzugt sind perfluorierten $C_1$-$C_3$-Alkylgruppen ausgewählt aus $CF_3$, $C_2F_5$ und/oder $C_3F_7$.

In bevorzugten Ausführungsformen ist das lineare Nitril der Formel (2) NC-$R^2$ ausgewählt aus der Gruppe umfassend 3-Methoxypropionitril und/oder 3-((Trimethylsilyl)oxy)propionitril. 3-((Trimethylsilyl)oxy)propionitril und insbesondere 3-Methoxypropionitril können in vorteilhafter Weise die Leitfähigkeit des Lösemittelgemisches erhöhen. 3-Methoxypropionitril und 3-((Trimethylsilyl)oxy)propionitril sind zudem kommerziell und in ausreichender Reinheit erhältlich, bzw. können auf einfache Weise aus einfach zugänglichen Edukten in guter Ausbeute hergestellt werden.

Erfindungsgemäß ist das zyklische Nitril NC-$R^1$, insbesondere Cyclopentancarbonitril, im Gemisch mit einem linearen Nitril der Formel (2) NC-$R^2$, vorzugsweise ausgewählt aus 3-Methoxypropionitril und/oder 3-((Trimethylsilyl)oxy)propionitril, verwendbar. Ein Zusatz an linearem Nitril NC-$R^2$ kann in vorteilhafter Weise die Leitfähigkeit, insbesondere bei Umgebungs- und höheren Temperaturen, verbessern. Vorzugsweise ist der Anteil an zyklischem Nitril NC-$R^1$, insbesondere Cyclopentancarbonitril, im Gemisch gleich oder höher als der des linearen Nitrils NC-$R^2$, vorzugsweise ausgewählt aus 3-Methoxypropionitril und/oder 3-((Trimethylsilyl)oxy)propionitril. Ein höherer Anteil an 3-Methoxypropionitril oder 3-((Trimethylsilyl)oxy)propionitril kann zwar zu einer höheren Leitfähigkeit beitragen, führt jedoch zu einer kürzeren Lebensdauer der Batterie. In bevorzugten Ausführungsformen liegen das nicht-aromatische zyklische Nitril der Formel (1) NC-$R^1$, insbesondere Cyclopentancarbonitril, und das lineare Nitril der Formel (2) NC-$R^2$, vorzugsweise ausgewählt aus 3-Methoxypropionitril und/oder 3-((Trimethylsilyl)oxy)propionitril, in einem Verhältnis NC-$R^1$ zu NC-$R^2$ im Bereich von ≥ 1:1 bis ≤ 9:1, bevorzugt im Bereich von ≥ 7:3 bis ≤ 8:2 vor. In diesen Bereichen, insbesondere bei einem Verhältnis von Cyclopentancarbonitril zu 3-Methoxypropionitril von ≥ 1:1 bis ≤ 7:3, kann ein besonders vorteilhaftes Verhältnis von Leitfähigkeit und Batterielebensdauer erzielt werden.

**EP 3 560 023 B1**

Das Gemisch aus zyklischem und linearem Nitril bildet wenigstens die Hälfte oder den Hauptbestandteil des Lösemittels des Elektrolyten aus. Der Elektrolyt kann entsprechend ein oder mehrere weitere organische Lösemittel enthalten. Bevorzugte nicht-fluorierte organische Lösemittel sind ausgewählt aus der Gruppe umfassend Ethylencarbonat, Ethylmethylcarbonat, Propylencarbonat, Dimethylcarbonat, Diethylcarbonat, gamma-Butyrolacton, gamma-Valerolacton, Dimethoxyethan, 1,3-Dioxolan, Methylacetat, Ethylacetat, Ethylmethansulfonat , Dimethylmethylphosphonat und/oder deren Mischungen. In bevorzugten Ausführungsformen umfasst der Elektrolyt als weiteres Lösemittel ein nicht-fluoriertes Carbonat. Nicht-fluorierte Carbonate werden üblicherweise als Lösemittel für Lithium-Ionen-Batterien verwendet und sind kommerziell erhältlich. Bevorzugt sind cyclische Carbonate wie Ethylencarbonat oder Propylencarbonat und/oder lineare Carbonate wie Diethylcarbonat, Dimethylcarbonat oder Ethylmethylcarbonat. Vorzugsweise ist das organische Lösungsmittel ausgewählt aus der Gruppe umfassend Propylencarbonat, Ethylencarbonat, Dimethylcarbonat und/oder deren Mischungen. In Ausführungsformen kann das Gemisch des zyklischen Nitrils und des linearen Nitrils NC-R$^2$ und das organische Lösemittel, insbesondere Carbonat-Lösemittel, in einem Verhältnis im Bereich von $\geq 1{:}1$ bis $\leq 9{:}1$, bevorzugt im Bereich von $\geq 7{:}3$ bis $\leq 8{:}2$ vorliegen.

Der erfindungsgemäße Elektrolyt umfasst neben dem Lösemittel ein Elektrolytsalz. Das Elektrolytsalz dient als Leitsalz. In vorteilhafter Weise verhindert ein Elektrolyt enthaltend ein nicht-aromatisches zyklisches Nitril NC-R$^1$ oder ein Gemisch des zyklischen Nitrils und eines linearen Nitrils NC-R$^2$ bei Verwendung von LiTFSI und ähnlich korrosiv wirkenden Salzen die in Carbonaten auftretenden Auflösungserscheinungen der Aluminium-Stromableiter. In Ausführungsformen ist das Elektrolytsalz daher ausgewählt aus der Gruppe umfassend Alkali- oder Erdalkalisulfonimidsalze, -methidsalze, -sulfonatsalze und/oder - oxalatoboratsalze. Insbesondere bevorzugt ist das Elektrolytsalz als Lithiumsalz. Vorzugsweise ist das Elektrolytsalz ein Lithiumsulfonimid- oder -sulfonatsalz ausgewählt aus der Gruppe umfassend Lithiumbis(trifluoromethansulfonyl)imid (LiTFSI, $LiN(SO_2CF_3)_2$), Lithiumbis(fluorosulfonyl)imid (LiFSI, $LiN(FSO_2)_2$), Lithium(trifluoromethylsulfonyl)-(nonafluorobutansulfonyl)imid ($LiN(SO_2CF_3)(SO_2C_4F_9)$), Lithium(fluorosulfonyl)-(nonafluorobutansulfonyl)imid ($LiN(SO_2F)(SO_2C_4F_9)$), Lithium(nonafluorobutan-2-on-sulfonyl)(trifluoromethylsulfonyl)imid ($LiN(SO_2C_2F_4OC_2F_5)(SO_2CF_3)$), Lithium(nonafluorobutan-2-on sulfonyl)(fluorosulfonyl)imid ($LiN(SO_2C_2F_4OC_2F_5)(SO_2F)$) und/oder Lithiumtrifluoromethansulfonat (LiTf, $Li(CF_3)SO_3$). Besonders bevorzugte Lithiumsulfonimidsalze sind LiTFSI und LiFSI. Ein bevorzugtes Lithiummethid ist $LiC(CF_3SO_2)_3$. Ein bevorzugtes Oxalatoboratsalz ist Lithiumbis(oxalato)borat (LiBOB). Sulfonimidsalze insbesondere LiTFSI und LiFSI sowie LiTf besitzen eine große thermische und elektrochemische Stabilität, sind nicht toxisch und unempfindlich gegenüber Hydrolyse. Der Elektrolyt kann weiterhin Additive enthalten. Der Elektrolyt kann wenigstens ein Additiv ausgewählt aus der Gruppe umfassend SEI (Solid Electrolyte Interphase)-Bildner oder Flammschutzmittel aufweisen. Geeignete Additive sind beispielsweise ausgewählt aus der Gruppe umfassend Fluorethylencarbonat, Chlorethylencarbonat, Vinylencarbonat, Vinylethylencarbonat, Ethylensulfit, Propansulton, Propensulton, Sulfite, vorzugsweise Dimethylsulfit und Propylensulfit, Ethylensulfat, Propylensulfat, Methylenmethandisulfonat, Trimethylensulfat, optional mit F, Cl oder Br substituierte Butyrolactone, Phenylethylencarbonat, Vinylacetat und/oder Trifluorpropylencarbonat. Diese Verbindungen können die Batterieleistung, beispielsweise die Kapazität, die Langzeitstabilität oder die Zyklenlebensdauer, verbessern. Vorzugsweise enthält der Elektrolyt ein Additiv im Bereich von $\geq 0{,}1$ Gew.-% bis $\leq 5$ Gew.-%, bevorzugt im Bereich von $\geq 1$ Gew.-% bis $\leq 3$ Gew.-%, bezogen auf das Gesamtgewicht des Elektrolyts.

Der Elektrolyt ist herstellbar durch Einbringen des Elektrolytsalzes und optional eines Additivs in das Lösemittel oder Lösemittelgemisch.

Ein weiterer Gegenstand der vorliegenden Erfindung betrifft einen elektrochemischen Energiespeicher, insbesondere einen Superkondensator oder Lithium-basierten elektrochemischer Energiespeicher, umfassend einen erfindungsgemäßen, oben beschriebenen, Elektrolyten.

Der Begriff "Energiespeicher" umfasst im Sinne der vorliegenden Erfindung primäre und sekundäre elektrochemische Energiespeichervorrichtungen, also Batterien (Primärspeicher) und Akkumulatoren (Sekundärspeicher). Im allgemeinen Sprachgebrauch werden Akkumulatoren häufig mit dem vielfach als Oberbegriff verwendeten Terminus "Batterie" bezeichnet. So wird der Begriff Lithium-Ionen-Batterie synonym zu Lithium-Ionen-Akkumulator verwendet, wenn nicht abweichend angegeben. Der Begriff "elektrochemische Energiespeicher" umfasst im Sinne der vorliegenden Erfindung auch elektrochemische Kondensatoren (englisch: electrochemical capacitors) oder Superkondensatoren (englisch: Supercapacitors, kurz Supercaps). Elektrochemische Kondensatoren, in der Literatur auch als Doppelschichtkondensatoren oder Superkondensatoren bezeichnet, sind elektrochemische Energiespeicher, die sich gegenüber Batterien durch eine deutlich höhere Leistungsdichte, gegenüber konventionellen Kondensatoren durch eine um Größenordnungen höhere Energiedichte auszeichnen. Lithium-basierte elektrochemische Energiespeicher sind vorzugsweise ausgewählt aus der Gruppe umfassend Lithium-Ionen-Batterien, Lithium-Ionen-Akkumulatoren und Polymer-Batterien. Bevorzugt ist der Energiespeicher eine Lithium-Ionen-Batterie bzw. ein Lithium-Ionen Akkumulator. Weiter bevorzugt ist der elektrochemische Energiespeicher ein elektrochemischer Kondensator insbesondere Superkondensator.

Ein weiterer Gegenstand der Erfindung betrifft die Verwendung eines erfindungsgemäßen Elektrolyten zur Hemmung der Korrosion eines Aluminium-Stromleiters eines elektrochemischen Energiespeichers, insbesondere eines Superkondensators oder Lithium-basierten elektrochemischen Energiespeichers, enthaltend ein Elektrolytsalz ausge-

5

wählt aus der Gruppe umfassend Alkali- oder Erdalkalisulfonimidsalze, -methidsalze, -sulfonatsalze und/oder -oxalatoboratsalze.

Ein weiterer Gegenstand der Erfindung betrifft ein Verfahren zur Hemmung der Korrosion eines Aluminium-Stromleiters eines elektrochemischen Energiespeichers, wobei man den elektrochemischen Energiespeicher unter Verwendung des erfindungsgemäßen Elektrolyten und eines Elektrolytsalzes ausgewählt aus der Gruppe umfassend Alkali- oder Erdalkalisulfonimidsalze, -methidsalze, -sulfonatsalze und/oder -oxalatoboratsalze betreibt.

Beispiele und Figuren, die der Veranschaulichung der vorliegenden Erfindung dienen, sind nachstehend angegeben.

Hierbei zeigen die Figuren:

Figur 1    das elektrochemische Stabilitätsfenster des Elektrolyten 1M LiTFSI in CPC. Die gestrichelte Linie zeigt das oxidative Grenzpotential ($E_{limit}$ = 5,8 V vs. Li/Li$^+$) bei einer Stromdichte von 0,1 mA cm$^{-2}$ an.

Figur 2    die Leitfähigkeit des Elektrolyten 1 M LiTFSI in CPC (Figur 2A) und in CPC / 3MPN (7:3) (Figur 2B) in Abhängigkeit von der Temperatur.

Figur 3    die Entladekapazität in Figur 3A und die Coulombsche Effizienz in Figur 3B aufgetragen gegen die Zyklenzahl für die Zyklisierung unter Verwendung des Elektrolyten 1 M LiTFSI in CPC.

Figur 4    die Entladekapazität in Figur 4A und die Coulombsche Effizienz in Figur 4B aufgetragen gegen die Zyklenzahl für die Zyklisierung unter Verwendung des Elektrolyten 1 M LiTFSI in CPC / 3MPN (7:3) enthaltend 5% FEC.

Figur 5    den Kapazitätserhalt aufgetragen gegen die Zyklenzahl für die Zyklisierung des Elektrolyten 1 M LiTFSI in CPC unter Verwendung verschiedener Entladeströme.

Figur 6    den Kapazitätserhalt aufgetragen gegen die Zyklenzahl für die Zyklisierung des Elektrolyten 1 M LiTFSI in CPC / 3MPN (7:3) enthaltend 5% FEC unter Verwendung verschiedener Entladeströme.

Figur 7    die Detektions-Kurve der adiabatischen Reaktionskalorimetrie für Carbonatbasierte Vergleichselektrolyte enthaltend 1 M LiPF$_6$ in EC:DMC (1:1) und 1 M LiTFSI in PC in Figur 7A und Nitril-basierte Elektrolyte enthaltend 1M LiTFSI in CPC oder CHC und 1 M LiPF$_6$ in CHC in Figur 7B.

Beispiel 1

Bestimmung der elektrochemischen und thermischen Eigenschaften

1.1 Bestimmung des Siedepunkts von Cyclopentancarbonitril und des Zersetzungspunkts des Leitsalzes LiTFSI

Siede- bzw. Zersetzungspunktpunkt eines Elektrolyten enthaltend 1 M LiTFSI (3M) in Cyclopentancarbonitril (CPC) (ABCR) wurden mittels thermogravimetrischer Analyse (TGA) auf dem Gerät Q50 (TA Instruments, USA) gemessen. Die Heizrate betrug 10°C min$^{-1}$. Der Siedepunkt wurde zu 143°C bestimmt. Die Zersetzung des Leitsalzes begann erst bei Temperaturen über 300°C. Somit weist Cyclopentancarbonitril (CPC) in Verbindung mit LiTFSI eine im Vergleich zu linearen Carbonaten hohe thermische Stabilität auf.

1.2 Bestimmung der Schmelz- und Glasübergangspunkte verschiedener Elektrolyte

Schmelz- und Glasübergangspunkte von Elektrolyten enthaltend 1 M LiTFSI (3M) in Cyclopentancarbonitril (CPC), 3-Methoxypropionitril (3MPN) (ABCR) und Gemischen von CPC und 3MPN in einem Gewichtsverhältnis von 1:1 und 3:7 wurden mittels dynamischer Differenzkalorimetrie (DSC) auf dem Gerät Q2000 (TA Instruments, USA) gemessen. Der untersuchte Temperaturbereich lag im Bereich von +50°C bis -100°C, sowie +120°C bis - 100°C. Die Temperaturrampe war 10 °C min$^{-1}$.

Es wurde festgestellt, dass der Schmelzpunkt des Elektrolyten 1 M LiTFSI in Cyclopentancarbonitril (CPC) bei -37°C lag, die Glasübergangtemperatur bei -135,4°C, während Elektrolyte unter Verwendung von Mischungen von CPC und 3MPN im Verhältnis von 1:1 und 3:7 sowie reinem 3-Methoxypropionitril (3MPN) keinen Schmelzpunkt aufwiesen.

1.3 Bestimmung des elektrochemischen Stabilitätsfensters des Elektrolyten 1M LiTFSI in CPC

Das elektrochemische Stabilitätsfenster wurde durch Verwendung der Messmethodik "Linear sweep voltammetry" (LSV) bestimmt. Die Messung wurde auf einem VMP3 Potentio-/Galvanostaten (Biologic) unter Verwendung des folgenden Elektrodenaufbaus durchgeführt. Für die Bestimmung des oxidativen Stabilitätsfensters wurde als Arbeitselektrode Platin (Pt, ø=0,1 cm) und als Gegen- und Referenzelektrode Lithium verwendet. Die Vorschubgeschwindigkeit betrug 0,1 mV s$^{-1}$. Für die Bestimmung des reduktiven Stabilitätsfensters wurde als Arbeitselektrode Kupfer (Cu, ø=1,2 cm) und als Gegen- und Referenzelektrode Lithium verwendet. Die Vorschubgeschwindigkeit betrug 0,1 mV s$^{-1}$.

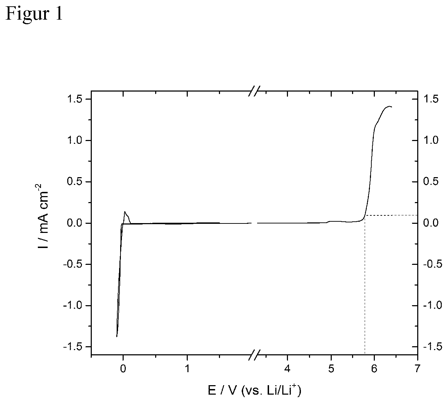

Die Figur 1 zeigt das elektrochemische Stabilitätsfenster des Elektrolyten 1M LiTFSI in CPC. Die gestrichelte Linie zeigt das oxidative Grenzpotential $E_{limit}$ = 5,8 V vs. Li/Li$^+$ bei einer Stromdichte von 0,1 mA cm$^{-2}$ an. Der Elektrolyt enthaltend 1 M LiTFSI in CPC weist somit eine hohe elektrochemische Stabilität auf.

Die erfindungsgemäßen Elektrolyte weisen somit ein weites elektrochemisches und thermisches Stabilitätsfenster auf. Somit können Batterien enthaltend die Elektrolyte auch im Hochtemperaturbereich sicher gefahren werden können.

Beispiel 2

Bestimmung der Leitfähigkeit

Die Leitfähigkeit wurde mittels Elektrochemischer Impedanz Spektroskopie (EIS) ermittelt. Dazu wurden 1,3 ml des zu vermessenden Elektrolyten in eine 2-Elektrodenzelle (PTFE Grundkörper, Elektroden aus rostfreiem Stahl) gefüllt. Die Zellkonstante wurde mit einer Standardlösung mit bekannter Leitfähigkeit ermittelt. Die EIS wurde auf einem 1287A Potentio-/Galvanostaten in Kombination mit einem 1260 Impedance/gain-phase Analyzer, (beides Solartron) vermessen. Der vermessene Frequenzbereich lag im Bereich von 1MHz bis 100 mHz. Die Amplitude betrug 10 mV. Die Messung wurde in einem Temperaturbereich von - 40°C bis + 60°C durchgeführt.

Die Leitfähigkeit folgender Elektrolyte wurde bestimmt:

Elektrolyt 1: 1 M LiTFSI in CPC (nicht-erfindungsgemäß)
Elektrolyt 2: 1 M LiTFSI in CPC:3MPN im Verhältnis 7:3
Elektrolyt 3: 1 M LiTFSI in CPC:3MPN im Verhältnis 1:1
Elektrolyt 4: 1 M LiTFSI in CPC:3MPN im Verhältnis 3:7
Elektrolyt 5: 1 M LiTFSI in 3MPN (nicht-erfindungsgemäß)
Vergleichselektrolyt 6: 1 M LiTFSI in Propylencarbonat (PC)

Die folgende Tabelle 1 fasst die jeweiligen Leitfähigkeiten der Elektrolyte umfassend 1 M LiTFSI in verschiedenen Lösemitteln bei Temperaturen von -40°C bis 60°C zusammen:

Tabelle 1: temperaturabhängige Leitfähigkeit in verschiedenen Lösemitteln

| T (°C) | σ (mS cm$^{-1}$) | | | | | |
|---|---|---|---|---|---|---|
| | CPC | CPC:3MPN (7:3) | CPC:3MPN (1:1) | CPC:3MPN (3:7) | 3MPN | PC |
| -40 | 0,8 | 1,1 | 1,2 | 1,2 | 1,0 | 0,3 |
| -30 | 1,2 | 1,7 | 1,8 | 1,9 | 1,7 | 0,6 |
| -20 | 1,7 | 2,4 | 2,6 | 2,8 | 2,6 | 1,2 |
| -10 | 2,2 | 3,2 | 3,5 | 3,7 | 3,6 | 1,7 |
| 0 | 2,7 | 3,9 | 4,4 | 4,8 | 4,7 | 2,6 |
| 10 | 3,4 | 4,8 | 5,4 | 5,9 | 5,9 | 3,4 |
| 20 | 3,8 | 5,7 | 6,4 | 6,8 | 7,1 | 4,4 |
| 30 | 4,2 | 6,6 | 7,4 | 8,3 | 8,3 | 5,4 |
| 40 | 4,9 | 7,5 | 8,4 | 9,4 | 9,6 | 6,7 |
| 50 | 5,3 | 8,4 | 9,4 | 10,7 | 10,7 | 8,4 |
| 60 | 5,7 | 9,1 | 10,5 | 11,5 | 11,8 | 9,9 |

Wie man der Tabelle 1 entnimmt, war die Leitfähigkeit des Elektrolyten enthaltend 1 M LiTFSI in Cyclopentancarbonitril (CPC) bei tiefen Temperaturen deutlich höher als die des Standardlösemittels Propylencarbonat (PC) und war auch bei Raumtemperatur vergleichbar. Mit Erhöhen des Anteils an 3-Methoxypropionitril (3MPN) stieg auch die Leitfähigkeit bei höheren Temperaturen deutlich an, während die Tieftemperaturleitfähigkeit gut blieb.

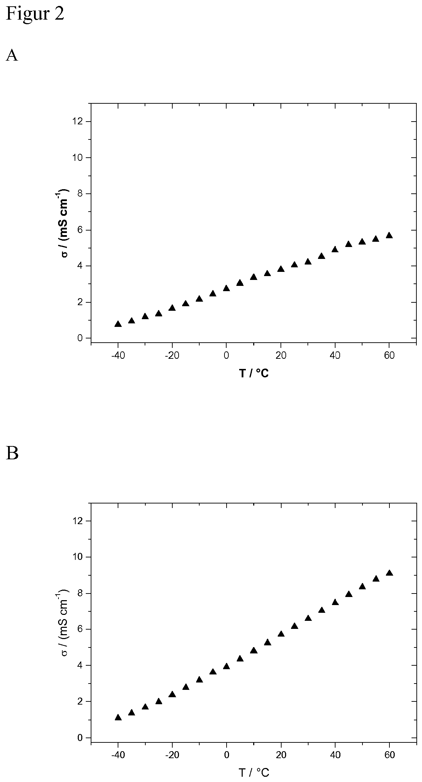

Die Figur 2 zeigt in Figur 2A den Verlauf der Leitfähigkeit des Elektrolyten 1 M LiTFSI in CPC, sowie in Figur 2B des Elektrolyten 1 M LiTFSI in einem 7:3-Gemisch (Gew.-%) von Cyclopentancarbonitril und 3-Methoxypropionitril (CPC / 3MPN (7:3)) im Temperaturbereich von -40°C - +60°C.

Diese Ergebnisse zeigen, dass Elektrolyte basierend auf dem Lösungsmittel Cyclopentancarbonitril oder Gemischen von Cyclopentancarbonitril und 3-Methoxypropionitril über den gesamten relevanten Temperaturbereich eine gute Leitfähigkeit aufweisen.

Beispiel 3

Untersuchung der Langzeitzyklenstabilität unter Anlegen eines konstanten Stroms

Untersuchung der Langzeitzyklenstabilität erfolgte in einer Vollzelle in einem Knopfzellaufbau (CR2032) unter Nutzung von Litihum-Nickel$_{1/3}$-Mangan$_{1/3}$-Cobalt$_{1/3}$-Oxid (NMC(111)) und Graphit als Aktivmaterialien. Als Separator diente eine Lage von Freudenberg2226 Polyolefinvlies. Die Zyklisierungen wurden in einem Spannungsfenster von 2,8 V - 4,2 V durchgeführt. Es wurden 2 Formierungszyklen gefahren bei 0,1C, gefolgt von 3x 1/3C Lade-/Entladezyklen. Der erste Lade-/Entladezyklus diente zur Bestimmung der Anfangsentladekapazität. Die Zyklisierung (Laden/Entladen) wurde danach mit 1C so lange durchgeführt bis nur noch 80% der anfänglichen Entladekapazität (bei 1C) erreicht wurde. Die Messungen bei konstantem Strom wurden an einem Batterietester Series 4000 (Maccor) bei 20 °C $\pm$ 0,1 °C durchgeführt.

Ein Elektrolyt enthaltend 1 M LiTFSI und 5 Gew.-% Fluoroethylencarbonat (FEC) als Additiv wurde hergestellt, indem die jeweils benötigte Menge an LiTFSI in Cyclopentancarbonitril (CPC) gelöst wurde und die entsprechende Menge FEC zugegeben wurde. In gleicher Weise wurden Elektrolyte enthaltend 1 M LiTFSI und 5 Gew.-% FEC in 3-Methoxypropionitril (3MPN) und Gemischen von CPC und 3MPN in einem Gewichtsverhältnis von 7:3, 1:1 und 3:7 hergestellt. Als Vergleichselektrolyt wurde eine Lösung enthaltend 1 M LiPF$_6$ und 2 Gew.-% Vinylencarbonat (VC) in einem Gemisch von Ethylencarbonat (EC) und Ethylmethylcarbonat (EMC) in einem Gewichtsverhältnis von 3:7 verwendet.

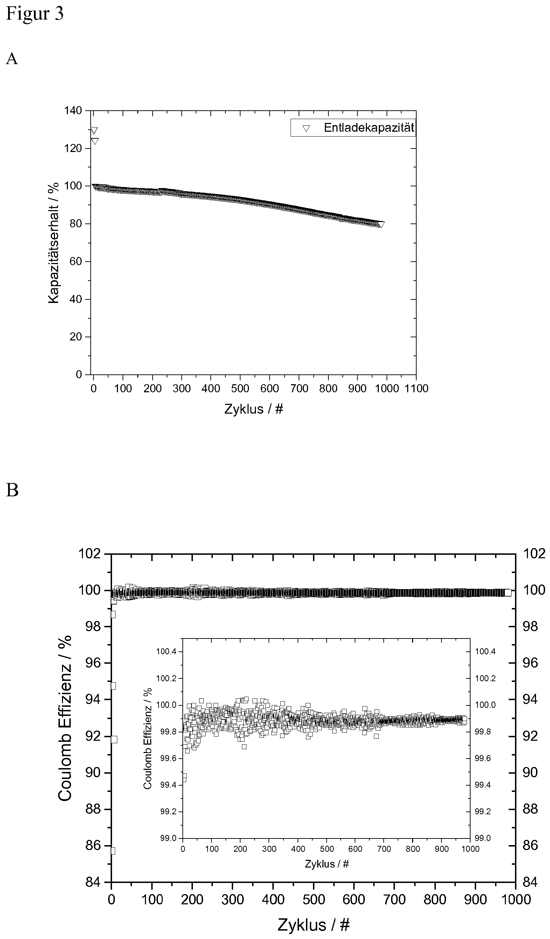

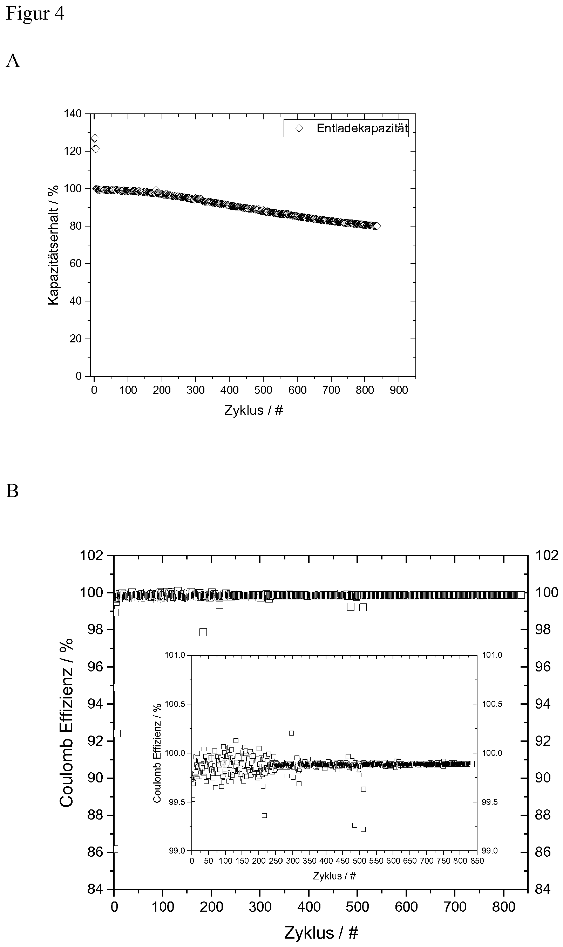

Die Figur 3 zeigt die Ergebnisse des Elektrolyten 1 M LiTFSI und 5% FEC in CPC. In Figur 3A ist die Entladekapazitätserhaltung und in Figur 3B die Coulombsche Effizienz gegen die Zyklenzahl gezeigt. Die Figur 4 zeigt die Ergebnisse des Elektrolyten enthaltend das Lösemittelgemisch CPC und 3MPN im Gewichtsverhältnis von 7:3. In Figur 4A ist die Entladekapazitätserhaltung und in Figur 4B die Coulombsche Effizienz gegen die Zyklenzahl gezeigt. Wie die Figuren 3 und 4 zeigen, blieb die Entladekapazität für CPC für nahezu 1000 Zyklen und für das Gemisch CPC und 3MPN im Gewichtsverhältnis von 7:3 für mehr als 800 Zyklen über 80% und die Coulombsche Effizienz betrug nach 100 Zyklen nahezu 100%.

Die folgende Tabelle 2 fasst die jeweilige Zyklenzahl bis zum Absinken der Entladekapazität auf 80% und die Coulombsche Effizienz des ersten Zyklus zusammen:

Tabelle 2: Langzeitzyklenstabilität

| Elektrolyt | Zyklenanzahl > 80% | Coulombsche Effizienz Zyklus 1 / % |
|---|---|---|
| 1 M LiTFSI / CPC, 5% FEC | 981 | 85,7 |
| 1 M LiTFSI / CPC:3MPN (7:3) 5% FEC | 836 | 86,2 |
| 1 M LiTFSI / CPC:3MPN (1:1) 5% FEC | 943 | 86,2 |
| 1 M LiTFSI / CPC:3MPN (3:7) 5% FEC | 452 | 87,1 |
| 1 M LiTFSI / 3MPN 5% FEC | 719 | 87,5 |
| 1 M LiPF$_6$ / EC:EMC (3:7) 2% VC | 1039 | 88,5 |

Wie man der Tabelle 2 entnimmt, zeigten die Elektrolyte enthaltend 1 M LiTFSI und wenigstens zur Hälfte CPC einen guten Kapazitätserhalt und sind damit ähnlich gut geeignet wie der Vergleichselektrolyt 1 M LiPF$_6$ in EC:EMC (3:7), während ein höherer Anteil an 3MPN von 70 Gew.% zu einem Absinken des Kapazitätserhalts führte.

Beispiel 4

Bestimmung der Leistungseigenschaften durch C-Ratentest

Untersuchung der Leistungseigenschaften durch einen Ratentest erfolgte in einer Vollzelle in einem Knopfzellaufbau (CR2032) unter Nutzung von NMC(111) und Graphit als Aktivmaterialien. Als Separator diente eine Lage von Freudenberg2226 Polyolefinvlies. Die Zyklisierungen wurden in einem Spannungsfenster von 2.8 V - 4.2 V durchgeführt. Es wurden 2 Formierungszyklen gefahren bei 0,1C, gefolgt von 3x 1/3C Lade-/Entladezyklen. Anschließend erfolgt der Entladeratentest, bei welchem immer mit 1C geladen, aber die Entladerate angepasst wurde. Es wurde schrittweise von 1/3C (3x), 2/3C(3x), 1C (3x), 2C (3x), 3C (3x), 5C (3x), 7C (3x) auf 10C (3x) erhöht. Zum Abschluss wurde noch einmal mit 1/3C entladen, um die Integrität des Aktivmaterials zu überprüfen.

Entsprechend Beispiel 3 wurden Elektrolyte enthaltend 1 M LiTFSI und 5 Gew.-% Fluoroethylencarbonat (FEC) als Additiv in CPC, 3MPN und Gemischen von CPC und 3MPN in einem Gewichtsverhältnis von 7:3, 1:1 und 3:7 untersucht. Als Vergleichselektrolyt wurde eine Lösung enthaltend 1 M LiPF$_6$ und 3 Gew.-% FEC in einem Gemisch von EC und Dimethylcarbonat (DMC) in einem Gewichtsverhältnis von 1:1 verwendet.

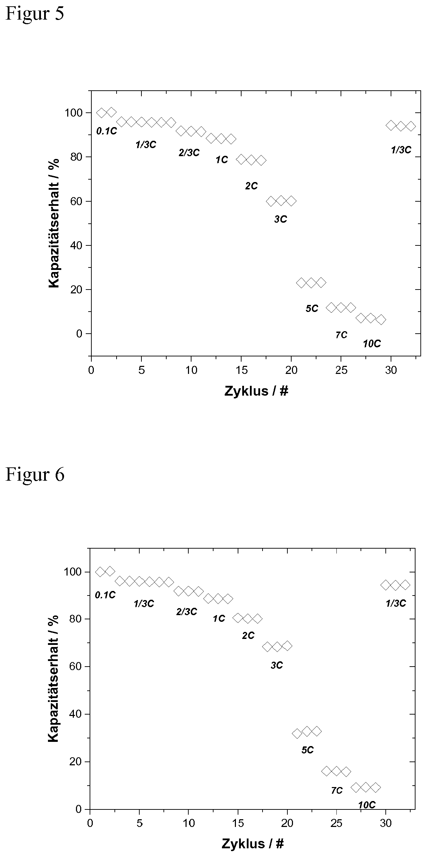

Die Figur 5 zeigt die Ergebnisse des Ratentests für den Elektrolyten 1 M LiTFSI und 5% FEC in CPC. Die Figur 6 zeigt die Ergebnisse des Ratentests für den Elektrolyten enthaltend das Lösemittelgemisch CPC und 3MPN im Gewichtsverhältnis von 7:3 und 5% FEC. Aufgetragen ist jeweils der Kapazitätserhalt gegen die Zyklenzahl.

Die folgende Tabelle 3 fasst den Kapazitätserhalt der Elektrolyte für die jeweiligen Entladeraten zusammen:

Tabelle 3: Kapazitätserhalt während C-Ratentest

| Entlade-rate | Kapazitätserhalt / % | | | | | |
|---|---|---|---|---|---|---|
| | 1M LiTFSI CPC 5% FEC | 1M LiTFSI CPC:3MPN (7:3) 5% FEC | 1M LiTFSI CPC:3MPN (1:1) 5% FEC | 1M LiTFSI CPC:3MPN (3:7) 5% FEC | 1M LiTFSI 3MPN 5% FEC | 1M LiPF$_6$ EC:DMC (1:1) 3% FEC |
| 1/10C | 100,0 | 100,0 | 100,0 | 100,0 | 100,0 | 100,0 |
| 1/3C | 95,3 | 95,4 | 94,0 | 95,9 | 98,0 | 96,2 |
| 2/3C | 91,2 | 91,5 | 90,0 | 92,2 | 95,7 | 92,7 |
| 1C | 87,9 | 88,4 | 87,0 | 89,1 | 92,9 | 90,0 |
| 2C | 78,2 | 80,0 | 79,3 | 81,8 | 84,0 | 83,4 |
| 3C | 60,1 | 68,5 | 68,2 | 72,4 | 67,9 | 74,2 |
| 5C | 23,1 | 32,8 | 35,3 | 40,9 | 32,6 | 47,2 |
| 7C | 11,8 | 15,8 | 16,8 | 18,5 | 15,3 | 24,6 |
| 10C | 6,3 | 9,2 | 9,5 | 9,7 | 8,6 | 12,4 |
| 1/3C | 93,7 | 94,2 | 90,2 | 94,0 | 96,3 | 95,4 |

Wie man der Tabelle 3 und den Figuren 5 und 6 entnimmt, zeigten die Elektrolyte enthaltend 1 M LiTFSI und CPC, 3MPN oder deren Gemische bis zu einer Entladerate von 2C ähnlich gute Ergebnisse wie der Vergleichselektrolyt 1 M LiPF$_6$ in EC:DMC (1:1), der für hohe Leistung und hohe Raten das derzeit beste Elektrolytsystem stellt.

Beispiel 5

Bestimmung der anodischen Aluminiumauflösung in verschiedenen Nitrilgemischen

Das Ausmaß der anodischen Aluminiumauflösung wurde in einem 3-Elektroden T-Zellen Setup (Swagelok®) mit Aluminiumfolie (ø=12 mm) als Arbeitselektrode, Lithium als Gegen-(ø=12 mm) und Referenzelektrode (ø=5 mm) vermessen. Als Separator wurde 3 Lagen von Freudenberg (ø=13 mm) Polyolefinvlies verwendet. Die Elektrolyte wurde mittels potentiodynamischen Zyklisierung mit einer Vorschubgeschwindigkeit von 0,023 mV s$^{-1}$, zwischen 3.5 V und 4.3 V über 3 Zyklen vermessen. Die Bestimmung erfolgte bei Raumtemperatur (20 °C $\pm$ 2 °C).

Entsprechend Beispiel 4 wurden Elektrolyte enthaltend 1 M LiTFSI und 5 Gew.-% Fluoroethylencarbonat (FEC) als Additiv in CPC, 3MPN und Gemischen von CPC und 3MPN in einem Gewichtsverhältnis von 7:3 und 3:7 untersucht. Weiterhin wurde ein Elektrolyt enthaltend 1 M LiTFSI und 3 Gew.-% FEC in 3-((Trimethylsilyl)oxy)propionitril (TMSOPN) untersucht. Als Vergleichselektrolyt wurde eine Lösung enthaltend 1 M LiTFSI und 3 Gew.-% FEC in einem Gemisch von EC und Dimethylcarbonat (DMC) in einem Gewichtsverhältnis von 1:1 verwendet.

Die Masse des aufgelösten Aluminiums wurde unter der Verwendung des Faradayschen Gesetzes:

$$m = M \cdot Q / (z \cdot F)$$

mit m...Masse des Stoffes, M...molare Masse, z...Ladungszahl des verwendeten Ions, F...Faraday Konstante, berechnet. Dabei wird angenommen, dass die Ladung für die folgende Redoxreaktion verwendet wird:

$$Al \rightarrow Al^{3+} + 3\ e^-$$

Die folgende Tabelle 4 fasst für die verschiedenen Elektrolyte die jeweils für den ersten, zweiten und dritten Formierungszyklus, entsprechend ca. 60 Stunden Laufzeit des Experiments, berechneten Mengen an aufgelöstem Aluminium sowie die Gesamtsumme aufgelösten Aluminiums zusammen:

Tabelle 4: gelöstes Aluminium

| | gelöstes Al / mg | | | | | |
|---|---|---|---|---|---|---|
| | CPC 5% FEC | CPC:3MPN (7:3) 5% FEC | CPC:3MPN (3:7) 5% FEC | 3MPN 5% FEC | TMSOPN 3% FEC | EC:DMC (1:1) 3% FEC |
| Zyklus 1 | $1{,}48 \cdot 10^{-3}$ | $2{,}97 \cdot 10^{-3}$ | $2{,}45 \cdot 10^{-3}$ | $2{,}49 \cdot 10^{-3}$ | $5{,}98 \cdot 10^{-3}$ | 1,128 |
| Zyklus 2 | $5{,}15 \cdot 10^{-4}$ | $1{,}03 \cdot 10^{-3}$ | $7{,}46 \cdot 10^{-4}$ | $6{,}84 \cdot 10^{-4}$ | $4{,}27 \cdot 10^{-4}$ | 0,590 |
| Zyklus 3 | $3{,}52 \cdot 10^{-4}$ | $4{,}41 \cdot 10^{-4}$ | $5{,}42 \cdot 10^{-4}$ | $5{,}99 \cdot 10^{-4}$ | $4{,}63 \cdot 10^{-4}$ | 0,315 |
| Summe | $2347 \cdot 10^{-3}$ | $3{,}514 \cdot 10^{-3}$ | $3{,}738 \cdot 10^{-3}$ | $3{,}773 \cdot 10^{-3}$ | $1{,}489 \cdot 10^{-3}$ | 2,034 |

Wie man der Tabelle 4 entnimmt, zeigten die Elektrolyte enthaltend 1 M LiTFSI in den Nitril-Lösemitteln Cyclopentancarbonitril, 3-Methoxypropionitril und 3-((Trimethylsilyl)oxy)propionitril und deren Mischungen im Gegensatz zu einer Verwendung von EC/DMC als Lösemittel nur eine verschwindend geringe Aluminiumauflösung. Hierbei waren zwischen den verschiedenen zyklischen und linearen Nitrilen bzw. deren Mischungen nur geringe Unterschiede zu erkennen.

Bestätigt wurde dieses Ergebnis durch Oberflächenanalytik mittels Rasterelektronenmikroskopie (REM). Die Morphologie der Oberfläche der zyklisierten Aluminiumelektroden wurde mittels Rasterelektronenmikroskopie untersucht. Die Proben wurden hierfür auf einem Auriga Crossbeam Workstation der Firma Zeiss vermessen. Die Elektroden, die mit 1 M LiTFSI in EC/DMC als Lösemittel zyklisiert wurden, zeigten unter dem Mikroskop deutlichen Lochfraß und Auflösungserscheinungen, während die Elektroden, die in Cyclopentancarbonitril, 3-Methoxypropionitril und 3-((Trimethylsilyl)oxy)propionitril und deren Mischungen zyklisiert wurden, weiterhin eine glatte und unbeschädigte Oberfläche zeigten.

Diese Ergebnisse zeigen, dass Cyclopentancarbonitril, 3-Methoxypropionitril und 3-((Trimethylsilyl)oxy)propionitril die Aluminiumkorrosion bei Verwendung von LiTFSI und ähnlich korrosiv wirkenden Leitsalzen hemmen bzw. verhindern können.

Beispiel 6

Bestimmung der anodischen Aluminiumauflösung für verschiedene Anteile an zyklischem Nitril im Lösemittelgemisch

Der Effekt verschiedener Anteile an zyklischem Nitril am Gesamtlösemittel in Bezug auf die Aluminiumauflösung wurde untersucht. Hierzu wurde wie unter Beispiel 5 beschrieben, ein 3-Elektroden T-Zellen Setup (Swagelok®) mit Aluminiumfolie (ø=12 mm) als Arbeitselektrode, Lithium als Gegen- (ø=12 mm) und Referenzelektrode (ø=5 mm) verwendet.

Es wurden Elektrolyte enthaltend 1 M LiTFSI als Leitsalz und 5 Gew.-% Fluorethylencarbonat (FEC) als Additiv in Cyclopentancarbonitril (CPC) und in Gemischen von EC und CPC in einem Gewichtsverhältnis von 3:7, 2:8 und 1:9 untersucht. Wie unter Beispiel 5 beschrieben, wurde jeweils für den ersten, zweiten und dritten Formierungszyklus die Menge an aufgelöstem Aluminium sowie deren Summe berechnet. Die Messungen wurden an jeweils drei Proben durchgeführt.

Die folgende Tabelle 5 fasst die Mittelwerte an berechneten finalen Mengen aufgelösten Aluminiums der jeweiligen Proben für die verschiedenen Zusammensetzungen des Lösemittels zusammen:

Tabelle 5: gelöstes Aluminium

| Elektrolyt | gelöstes Al (mg) |
|---|---|
| 1 M LiTFSI in EC:CPC 3:7 | 0,358 |
| 1 M LiTFSI in EC:CPC 2:8 | 0,140 |
| 1 M LiTFSI in EC:CPC 1:9 | 0,012 |
| 1 M LiTFSI in CPC | 0,002 |

Wie man der Tabelle 5 entnimmt, zeigen die Elektrolyte enthaltend 1 M LiTFSI insbesondere bei einem Anteil an CPC von mehr als 70 Gew.-% des Lösemittels eine deutliche Verminderung der Aluminiumauflösung, die mit steigendem Anteil an CPC stieg.

Beispiel 7

Bestimmung der anodischen Aluminiumauflösung bei Verwendung von Lithiumtrifluoromethansulfonat als Leitsalz

Der Effekt der Verwendung von Cyclopentancarbonitril (CPC) auf die Hemmung der Aluminiumauflösung wurde weiter unter Verwendung des ebenfalls stark korrosiv wirkenden Lithiumtrifluoromethansulfonat (LiTf) als Leitsalz untersucht. Hierzu wurde wie unter Beispiel 5 beschrieben, ein 3-Elektroden T-Zellen Setup (Swagelok®) mit Aluminiumfolie (ø=12 mm) als Arbeitselektrode, Lithium als Gegen- (ø=12 mm) und Referenzelektrode (ø=5 mm) verwendet.

Es wurden Elektrolyte enthaltend 1 M Lithiumtrifluoromethansulfonat (LiTf) und 5 Gew.-% Fluorethylencarbonat (FEC) als Additiv in Propylencarbonat sowie in Cyclopentancarbonitril (CPC) verwendet. Wie unter Beispiel 5 beschrieben, wurde jeweils für den ersten, zweiten und dritten Formierungszyklus die Menge an aufgelöstem Aluminium sowie deren Summe berechnet. Die Messungen wurden für PC mit drei Proben und für CPC mit zwei parallen Proben durchgeführt und der Mittelwert gebildet. Hierbei zeigte sich für 1 M LiTf in Propylencarbonat eine mittlere Aluminiumauflösung von 1,51 mg, während sich für 1 M LiTf in CPC als Lösemittel lediglich eine mittlere Aluminiumauflösung von 0,42 mg ergab.

Dies zeigt, dass auch für andere korrosive Leitsalze wie LiTf eine deutliche Verminderung der Aluminiumauflösung durch die Verwendung von CPC als Lösemittel erzielt werden kann.

Beispiel 8

Bestimmung der thermischen Stabilität der Nitril-basierten Elektrolyte

Zur Bestimmung der thermischen Stabilität wurden Untersuchungen in einem adiabatischen Kalorimeter durchgeführt. Die adiabatische Reaktionskalorimetrie (Accelerating Rate Calorimetry, ARC) ermöglicht das Messen von Temperaturänderungen und bei entsprechender Geräteausstattung auch Wärmemengen während chemische Reaktionen unter näherungsweise adiabatischen, einen Wärmeaustausch mit der Umgebung ausschließenden, Bedingungen.

Die Messungen wurden an einem angepassten Kalorimeter (Thermal Hazard Technology) durchgeführt. Unter Inertgas (Argon) in einer *Glovebox* (UNIlab, MBRAUN) wurden jeweils 2 mL der flüssigen Elektrolyt Probe in ein Titan Bomben-Gefäß mit einer Wandstärke von 0,6 mm gefüllt und anschließend unter einem Argon Strom am Messgerät befestigt. Die Messung wurde mit der sogenannten *heat wait search* (HWS) Methode durchgeführt.

Die Messung nach der HWS-Methode umfasst mehrere Sequenzen von jeweils einem Heiz-(heat), Beharrungs-(wait) und Beobachtungsschritt (search), die den Elektrolyten auf diskrete, sich erhöhende Temperaturniveaus bringen. Ziel ist es dabei, jene Temperaturen zu identifizieren, bei welchen eine exotherme Reaktion einsetzt. Jeder HWS-Zyklus läuft chronologisch nach einem Schema ab wobei der Elektrolyt auf eine Solltemperatur erwärmt wird (heat), das thermische Gleichgewicht zwischen Prüfzelle und Probe hergestellt wird (wait), und die ARC-Steuerung in dem sich anschließenden Schritt (search) die Probentemperatur beobachtet. Bei einer selbstständigen Änderung der Temperatur der Probe, zeichnet das System die Rate auf, mit der sich die Probe selbst über einen bestimmten Zeitraum erhitzt (self-heating rate, SHR).

Es wurden Elektrolyte verwendet, die 1 M LiTFSI in Cyclopentancarbonitril (CPC) oder in Cyclohexancarbonitril (CHC) sowie 1 M LiPF$_6$ in CHC enthielten und mit Elektrolyten verglichen, die 1 M LiPF$_6$ in einem Gemisch von EC und DMC in einem Gewichtsverhältnis von 1:1 und 1 M LiTFSI in PC enthielten.

Die folgende Tabelle 6 fasst die verwendeten Parameter zusammen:

Tabelle 6: Parameter der ARC-Messung

| Parameter | Wert |
|---|---|
| Starttemperatur | 50 °C |
| Endtemperatur | 350 °C |
| Temperaturschritt | 5 °C |
| Beharrungszeit | 15 min |
| Beobachtungszeit | 15 min |
| Grenzwert der exothermen Reaktion im Beobachtungsschritt | 0,02 °C/min |

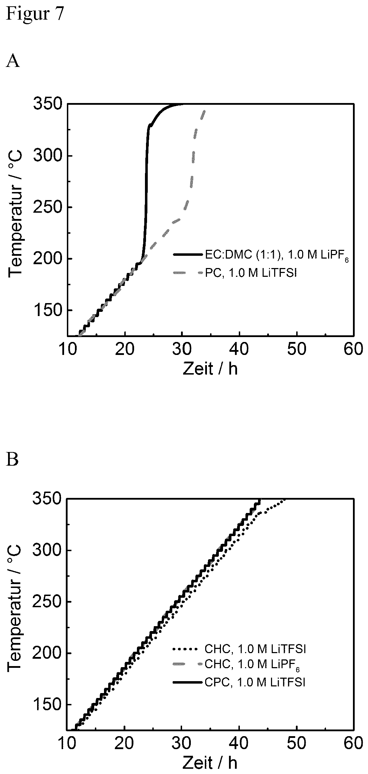

Die Figur 7A zeigt die Detektions-Kurve der adiabatischen Reaktionskalorimetrie für Carbonat-basierte Vergleichselektrolyte enthaltend 1 M $LiPF_6$ in EC:DMC (1:1) und 1 M LiTFSI in PC. Bei der Detektionskurve der ARC Messung ist die Temperatur gegen die Zeit aufgetragen. Das Stufen-Profil des Graphen, das aus der HWS Methode resultiert, ist deutlich zu erkennen. Die Abweichungen von diesem Profil im weiteren Verlauf des Graphen, stehen für selbstständige Temperaturerhöhungen der Probe, durch exotherme Reaktionen. Wie man der Figur 7A entnimmt, zeigten die Carbonat-basierten Elektrolyte schon ab ca. 200 °C exotherme Reaktionen, die sich nicht selbstständig wieder einstellten. In diesem Fall spricht man von einem sogenannten *thermal runaway,* welcher ein erhebliches Sicherheitsrisiko für die Batterieanwendung darstellt.

Die Figur 7B zeigt die Detektions-Kurve der adiabatischen Reaktionskalorimetrie der Nitril-basierten Elektrolyte enthaltend 1M LiTFSI in CPC oder CHC und 1 M $LiPF_6$ in CHC. Wie man den in Figur 7B gezeigten Temperaturänderungen der Nitril-basierten Proben entnimmt, zeigte keine der Proben im gemessenen Temperaturbereich eine selbstständige Temperaturerhöhung durch exotherme Reaktionen und damit auch kein *thermal runaway.* Dies bedeutet, dass die cyclischen Nitrile als Lösungsmittel für Elektrolytkompositionen eine höhere intrinsische Sicherheit aufweisen, als die Carbonat-Lösungsmittel.

Dieses Ergebnis zeigt eine deutlich bessere thermische Stabilität der CPC- und CHC-basierten Elektrolyte gegenüber den Carbonat-basierten Vergleichselektrolyten.

Insgesamt zeigen die Ergebnisse, dass die Verwendung eines nicht-aromatischen zyklischen Nitrils NC-R[1] oder eines Gemischs des zyklischen Nitrils und eines linearen Nitrils NC-R[2] als Lösemittel die bei Leitsalzen wie LiTFSI auftretende Auflösung von Aluminium gehemmt werden kann. Elektrolyte unter Verwendung dieser Nitrile als Lösemittel zeigten eine gute Leitfähigkeit, ein weites elektrochemisches und thermisches Stabilitätsfenster und eine gute Langzeitstabilität. Zudem waren die Elektrolyte mit gängigen Elektrodenmaterialien verwendbar. Somit kann ein nicht-korrosiver Elektrolyt zur Verwendung mit LiTFSI und ähnlich korrosiv wirkenden Leitsalzen für Lithium-Ionen-Batterien zur Verfügung gestellt werden.

**Patentansprüche**

1. Elektrolyt für einen elektrochemischen Energiespeicher umfassend ein Elektrolytsalz und wenigstens ein Lösemittel, **dadurch gekennzeichnet, dass** das Lösemittel im Bereich von ≥ 50 Gew.-% bis ≤ 100 Gew.-%, bezogen auf das Gesamtgewicht des Lösemittels, eines Gemischs eines nicht-aromatischen zyklischen Nitrils der Formel (1) NC-R[1] und eines linearen Nitrils der Formel (2) NC-R[2] umfasst, worin:

   R[1] ausgewählt ist aus der Gruppe umfassend $C_3$-$C_7$-Cycloalkyl und/oder $C_3$-$C_7$-Cycloalkenyl, jeweils unsubstituiert oder einfach oder mehrfach substituiert mit wenigstens einem Substituenten ausgewählt aus der Gruppe umfassend F, $C_1$-$C_5$-Alkyl, $C_1$-$C_4$-Alkoxy und/oder $C_1$-$C_4$-Siloxy, jeweils unsubstituiert oder einfach oder mehrfach mit Fluor substituiert,
   R[2] ausgewählt ist aus der Gruppe umfassend Alkoxyalkyl, Siloxyalkyl, wobei die Alkylgruppe jeweils 1 bis 8 Kohlenstoffatome und die Alkoxy- und Siloxygruppen jeweils 1 bis 4 Kohlenstoffatome aufweisen und unsubstituiert oder einfach oder mehrfach mit Fluor substituiert sind, und/oder unsubstituiertes oder einfach oder mehrfach mit Fluor substituiertes $C_1$-$C_8$-Alkyl.

2. Elektrolyt nach Anspruch 1, **dadurch gekennzeichnet, dass** das Gemisch aus zyklischem und linearem Nitril in einem Bereich von ≥ 70 Gew.-% bis ≤ 100 Gew.-%, vorzugsweise im Bereich von ≥ 80 Gew.-% bis ≤ 90 Gew.-%, bezogen auf ein Gesamtgewicht des Lösemittels von 100 Gew.-%, enthalten ist.

3. Elektrolyt nach Anspruch 1 oder 2, **dadurch gekennzeichnet, dass** $R^1$ des nicht-aromatischen zyklischen Nitrils der Formel (1) NC-$R^1$ ein $C_5$- oder $C_6$-Cycloalkyl ist, unsubstituiert oder einfach oder mehrfach mit Fluor oder einem fluorierten oder perfluorierten $C_1$-$C_3$-Alkyl substituiert, wobei das zyklische Nitril vorzugsweise Cyclopentancarbonitril ist.

4. Elektrolyt nach einem der vorhergehenden Ansprüche, **dadurch gekennzeichnet, dass** das lineare Nitril der Formel (2) NC-$R^2$ ausgewählt ist aus der Gruppe umfassend 3-Methoxypropionitril und/oder 3-((Trimethylsilyl)oxy)propionitril.

5. Elektrolyt nach einem der vorhergehenden Ansprüche, **dadurch gekennzeichnet, dass** das nicht-aromatische zyklische Nitril der Formel (1) NC-$R^1$ und das lineare Nitril der Formel (2) NC-$R^2$ in einem Verhältnis NC-$R^1$ zu NC-$R^2$ im Bereich von $\geq$ 1:1 bis $\leq$ 9:1, bevorzugt im Bereich von $\geq$ 7:3 bis $\leq$ 8:2 vorliegen.

6. Elektrolyt nach einem der vorhergehenden Ansprüche, **dadurch gekennzeichnet, dass** der Elektrolyt als weiteres Lösemittel ein nicht-fluoriertes organisches Lösemittel umfasst, vorzugsweise ausgewählt aus der Gruppe umfassend Ethylencarbonat, Ethylmethylcarbonat, Propylencarbonat, Dimethylcarbonat, Diethylcarbonat, gamma-Butyrolacton, gamma-Valerolacton, Dimethoxyethan, 1,3- Dioxolan, Methylacetat, Ethylacetat, Ethylmethansulfonat , Dimethylmethylphosphonat und/oder deren Mischungen.

7. Elektrolyt nach einem der vorhergehenden Ansprüche, **dadurch gekennzeichnet, dass** das Elektrolytsalz ausgewählt ist aus der Gruppe umfassend Alkali- oder Erdalkalisulfonimidsalze, -methidsalze, -sulfonatsalze und/oder -oxalatoboratsalze.

8. Elektrochemischer Energiespeicher, insbesondere Superkondensator oder Lithiumbasierter elektrochemischer Energiespeicher, umfassend einen Elektrolyten nach einem der Ansprüche 1 bis 7.

9. Verfahren zur Hemmung der Korrosion eines Aluminium-Stromleiters eines elektrochemischen Energiespeichers, wobei man den elektrochemischen Energiespeicher unter Verwendung des Elektrolyten nach einem der Ansprüche 1 bis 7 und eines Elektrolytsalzes ausgewählt aus der Gruppe umfassend Alkali- oder Erdalkalisulfonimidsalze, -methidsalze, -sulfonatsalze und/oder -oxalatoboratsalze betreibt.

10. Verwendung eines Elektrolyten nach einem der Ansprüche 1 bis 7 oder eines Elektrolyten umfassend ein Elektrolytsalz und wenigstens ein Lösemittel, wobei das Lösemittel im Bereich von $\geq$ 50 Gew.-% bis $\leq$ 100 Gew.-%, bezogen auf das Gesamtgewicht des Lösemittels, des nicht-aromatischen zyklischen Nitrils der Formel (1) NC-$R^1$ wie im Anspruch 1 definiert umfasst, zur Hemmung der Korrosion eines Aluminium-Stromleiters eines elektrochemischen Energiespeichers, insbesondere eines Superkondensators oder Lithium-basierten elektrochemischen Energiespeichers, enthaltend ein Elektrolytsalz ausgewählt aus der Gruppe umfassend Alkali- oder Erdalkalisulfonimidsalze, -methidsalze, -sulfonatsalze und/oder -oxalatoboratsalze.

**Claims**

1. Electrolyte for an electrochemical energy store, comprising an electrolyte salt and at least one solvent, **characterized in that** the solvent comprises from $\geq$ 50 % by weight to $\leq$ 100% by weight, based on the total weight of the solvent, of a mixture of a nonaromatic cyclic nitrile of the formula (1) NC-$R^1$ and a linear nitrile of the formula (2) NC-$R^2$, where:

   $R^1$ is selected from the group comprising $C_3$-$C_7$-cycloalkyl and/or $C_3$-$C_7$-cycloalkenyl, in each case unsubstituted or monosubstituted or polysubstituted by at least one substituent selected from the group comprising F, $C_1$-$C_5$-alkyl, $C_1$-$C_4$-alkoxy and/or $C_1$-$C_4$-siloxy, in each case unsubstituted or monosubstituted or polysubstituted by fluorene,
   $R^2$ is selected from the group comprising alkoxyalkyl, siloxyalkyl, where the alkyl group in each case has from 1 to 8 carbon atoms and the alkoxy and siloxy groups in each case have from 1 to 4 carbon atoms and are unsubstituted or monosubstituted or polysubstituted by fluorene, and/or unsubstituted $C_1$-$C_8$-alkyl or $C_1$-$C_8$-alkyl monosubstituted or polysubstituted by fluorene.

2. Electrolyte according to Claim 1, **characterized in that** the mixture of cyclic and linear nitrile is present in an amount of from $\geq$ 70 % by weight to $\leq$ 100% by weight, preferably from $\geq$ 80 % by weight to $\leq$ 90% by weight, based on a total weight of the solvent of 100% by weight.

3. Electrolyte according to Claim 1 or 2, **characterized in that** $R^1$ of the nonaromatic cyclic nitrile of the formula (1) NC-$R^1$ is a $C_5$- or $C_6$-cycloalkyl, unsubstituted or monosubstituted or polysubstituted by fluorene or a fluorinated or perfluorinated $C_1$-$C_3$-alkyl substituent, where the cyclic nitrile is preferably cyclopentanecarbonitrile.

4. Electrolyte according to any of the preceding claims, **characterized in that** the linear nitrile of the formula (2) NC-$R^2$ is selected from the group comprising 3-methoxypropionitrile and/or 3-((trimethylsilyl)oxy)propionitrile.

5. Electrolyte according to any of the preceding claims, **characterized in that** the nonaromatic cyclic nitrile of the formula (1) NC-$R^1$ and the linear nitrile of the formula (2) NC-$R^2$ are present in a ratio of NC-$R^1$ to NC-$R^2$ in the range from $\geq$ 1:1 to $\leq$ 9:1, preferably in the range from $\geq$ 7:3 to $\leq$ 8:2.

6. Electrolyte according to any of the preceding claims, **characterized in that** the electrolyte comprises a nonfluorinated organic solvent, preferably selected from the group comprising ethylene carbonate, ethyl methyl carbonate, propylene carbonate, dimethyl carbonate, diethyl carbonate, gamma-butyrolactone, gamma-valerolactone, dimethoxyethane, 1,3-dioxolane, methyl acetate, ethyl acetate, ethyl methanesulphonate, dimethyl methylphosphonate and/or mixtures thereof, as further solvent.

7. Electrolyte according to any of the preceding claims, **characterized in that** the electrolyte salt is selected from the group comprising alkali metal or alkaline earth metal sulphonimide salts, methide salts, sulphonate salts and/or oxalatoborate salts.

8. Electrochemical energy store, in particular supercapacitor or lithium-based electrochemical energy store, comprising an electrolyte according to any of Claims 1 to 7.

9. Method for inhibiting corrosion of an aluminium current conductor of an electrochemical energy store, wherein the electrochemical energy store is operated using the electrolyte according to any of Claims 1 to 7 and an electrolyte salt selected from the group comprising alkali metal or alkaline earth metal sulphonimide salts, methide salts, sulphonate salts and/or oxalatoborate salts.

10. Use of an electrolyte according to any of Claims 1 to 7 or of an electrolyte comprising an electrolyte salt and at least one solvent, where the solvent comprises from $\geq$ 50 % by weight to $\leq$ 100% by weight, based on the total weight of the solvent, of the nonaromatic cyclic nitrile of the formula (1) NC-$R^1$ as defined in Claim 1, for inhibiting corrosion of an aluminium current conductor of an electrochemical energy store, in particular a supercapacitor or lithium-based electrochemical energy store, containing an electrolyte salt selected from the group comprising alkali metal or alkaline earth metal sulphonimide salts, methide salts, sulphonate salts and/or oxalatoborate salts.

**Revendications**

1. Électrolyte pour un accumulateur d'énergie électrochimique comprenant un sel d'électrolyte et au moins un solvant, **caractérisé en ce que** le solvant comprend de $\geq$ 50 % en poids à $\leq$ 100 % en poids, par rapport au poids total du solvant, d'un mélange d'un nitrile cyclique non aromatique de formule (1) NC-$R^1$ et d'un nitrile linéaire de formule (2) NC-$R^2$, dans lesquelles :

R^1 est choisi dans le groupe comprenant $C_{3-7}$-cycloalkyle et/ou $C_{3-7}$-cycloalcényle, à chaque fois non substitué ou monosubstitué ou polysubstitué par au moins un substituant choisi dans le groupe comprenant F, $C_{1-5}$-alkyle, $C_{1-4}$-alcoxy et/ou $C_{1-4}$-silyloxy, à chaque fois non substitué ou monosubstitué ou polysubstitué par fluor,
$R^2$ est choisi dans le groupe comprenant alcoxyalkyle, silyloxyalkyle, le groupe alkyle présentant à chaque fois 1 à 8 atomes de carbone et les groupes alcoxy et silyloxy présentant à chaque fois 1 à 3 atomes de carbone et étant non substitués ou monosubstitués ou polysubstitués par fluor, et/ou $C_{1-8}$-alkyle non substitué ou monosubstitué ou polysubstitué par fluor.

2. Électrolyte selon la revendication 1, **caractérisé en ce que** le mélange de nitriles cyclique et linéaire est contenu dans une plage de $\geq$ 70 % en poids à $\leq$ 100 % en poids, de préférence dans une plage de $\geq$ 80 % en poids à $\leq$ 90 % en poids, par rapport à un poids total du solvant de 100 % en poids.

3. Électrolyte selon la revendication 1 ou 2, **caractérisé en ce que** $R^1$ du nitrile cyclique non aromatique de formule (1) NC-$R^1$ est un $C_{5-6}$-cycloalkyle, non substitué ou monosubstitué ou polysubstitué par fluor ou un $C_{1-3}$-alkyle fluoré

ou perfluoré, le nitrile cyclique étant de préférence le cyclopentanecarbonitrile.

4. Électrolyte selon l'une quelconque des revendications précédentes, **caractérisé en ce que** le nitrile linéaire de formule (2) NC-R$^2$ est choisi dans le groupe comprenant le 3-méthoxypropionitrile et/ou le 3-((triméthylsilyl)oxy)propionitrile.

5. Électrolyte selon l'une quelconque des revendications précédentes, **caractérisé en ce que** le nitrile cyclique non aromatique de formule (1) NC-R$^1$ et le nitrile linéaire de formule (2) NC-R$^2$ sont présents en un rapport NC-R$^1$ sur NC-R$^2$ dans la plage de $\geq 1 : 1$ à $\leq 9 : 1$, préférablement dans la plage de $\geq 7 : 3$ à $\leq 8 : 2$.

6. Électrolyte selon l'une quelconque des revendications précédentes, **caractérisé en ce que** l'électrolyte comprend un solvant organique non fluoré en tant que solvant supplémentaire, de préférence choisi dans le groupe comprenant le carbonate d'éthylène, le carbonate d'éthyle et de méthyle, le carbonate de propylène, le carbonate de diméthyle, le carbonate de diéthyle, la gamma-butyrolactone, la gamma-valérolactone, le diméthoxyéthane, le 1,3-dioxolanne, l'acétate de méthyle, l'acétate d'éthyle, le méthanesulfonate d'éthyle, le méthylphosphonate de diméthyle et/ou leurs mélanges.

7. Électrolyte selon l'une quelconque des revendications précédentes, **caractérisé en ce que** le sel d'électrolyte est choisi dans le groupe comprenant des sels de sulfonimide alcalins ou alcalino-terreux, des sels de méthide alcalins ou alcalino-terreux, des sels de sulfonate alcalins ou alcalino-terreux et/ou des sels d'oxalatoborate alcalins ou alcalino-terreux.

8. Accumulateur d'énergie chimique, en particulier supercondensateur ou accumulateur d'énergie électrochimique à base de lithium, comprenant un électrolyte selon l'une quelconque des revendications 1 à 7.

9. Procédé pour l'inhibition de la corrosion d'un conducteur en aluminium d'un accumulateur d'énergie électrochimique, dans lequel on exploite l'accumulateur d'énergie électrochimique en utilisant l'électrolyte selon l'une quelconque des revendications 1 à 7 et un sels d'électrolyte choisi dans le groupe comprenant des sels de sulfonimide alcalins ou alcalino-terreux, des sels de méthide alcalins ou alcalino-terreux, des sels de sulfonate alcalins ou alcalino-terreux et/ou des sels d'oxalatoborate alcalins ou alcalino-terreux.

10. Utilisation d'un électrolyte selon l'une quelconque des revendications 1 à 7 ou d'un électrolyte comprenant un sel d'électrolyte et au moins un solvant, le solvant comprenant dans la plage de $\geq 50 \%$ en poids à $\leq 100 \%$ en poids, par rapport au poids total du solvant, du nitrile cyclique non aromatique de formule (1) NC-R$^1$ tel que défini dans la revendication 1, pour l'inhibition de la corrosion d'un conducteur en aluminium d'un accumulateur d'énergie électrochimique, en particulier d'un supercondensateur ou d'un accumulateur d'énergie électrochimique à base de lithium, contenant un sel d'électrolyte choisi dans le groupe comprenant des sels de sulfonimide alcalins ou alcalino-terreux, des sels de méthide alcalins ou alcalino-terreux, des sels de sulfonate alcalins ou alcalino-terreux et/ou des sels d'oxalatoborate alcalins ou alcalino-terreux.

Figur 1

Figur 2

A

B

Figur 3

A

B

Figur 4

A

B

Figur 5

Figur 6

Figur 7

A

B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 602004004956 T2
- US 2016351960 A1
- JP 2016207313 A

- JP 2005267857 A
- EP 1406336 A1
- US 2016285127 A1